# EUROPEAN PATENT APPLICATION

(11) **EP 4 496 198 A1**
(43) Date of publication of application: **22.01.2025**
(21) Application number: 23849813.3
(22) Date of filing: 03.07.2023
(51) Int. Cl.: H02K 15/03, B29C 33/02, B29C 33/14, B29C 45/14, B29C 45/36, H02K 1/276

(54) **MANUFACTURING METHOD FOR ROTATING ELECTRICAL MACHINE-USE ROTOR AND MANUFACTURING DEVICE FOR ROTATING ELECTRICAL MACHINE-USE ROTOR**

(30) Priority: 03.08.2022 JP 2022124393
(71) Applicant: AISIN CORPORATION, Kariya-shi, Aichi 448-8650 (JP)
(72) Inventor: YAMANE, Minami, Kariya-shi, Aichi 448-8650 (JP)
(74) Representative: Kramer Barske Schmidtchen Patentanwälte PartG mbB
(86) International application number: PCT/JP2023/024565
(87) International publication number: WO 2024/029254

(57) **Abstract**

A method for manufacturing a rotor for a rotating electrical machine is disclosed. The method includes: a heating step of heating a workpiece having a magnetic hole in a non-set state in which an orienting magnetic field application device is located away from the workpiece, the workpiece being a workpiece of a rotor core for the rotating electrical machine; a setting step of, after the heating step, attaining a set state in which the orienting magnetic field application device is located closer to the workpiece than in the non-set state; and an injection molding step of, in the set state, filling the magnet hole in the workpiece with a material for a bonded magnet while applying an orienting magnetic field from the orienting magnetic field application device to the workpiece.

## Description

### TECHNICAL FIELD

The present disclosure relates to methods for manufacturing a rotor for a rotating electrical machine and apparatuses for manufacturing a rotor for a rotating electrical machine.

### BACKGROUND ART

A technique is known in which an orienting magnetic field application device (such as an orientation yoke) is contained in a mold, and a material for bonded magnets is injection molded into magnet holes of a workpiece (workpiece of a rotor for a rotating electrical machine) clamped by the mold while applying an orienting magnetic field from the orienting magnetic field application device to the workpiece.

### Related Art Documents

### Patent Documents

Patent Document 1: Japanese Unexamined Patent Application Publication No. 2017-34765 (JP 2017-34765 A)

### SUMMARY OF THE INVENTION

### Problem to be Solved by the Invention

In such a related art as described above, the orienting magnetic field application device is contained in the mold. Therefore, when heating the workpiece together with the mold during injection molding, the orienting magnetic field application device is also heated through the mold, which results in poor thermal efficiency. Increasing the temperature of the orienting magnetic field application device is also disadvantageous from the standpoint of generating a relatively strong magnetic field required for magnetic field orientation.

In one aspect, an object of the present disclosure is to reduce heat that is conducted to an orienting magnetic field application device out of heat generated by a heating device in order to heat a workpiece etc., during injection molding.

### Means for Solving the Problem

In one aspect, a method for manufacturing a rotor for a rotating electrical machine is provided that includes: a heating step of heating a workpiece having a magnetic hole in a non-set state in which an orienting magnetic field application device is located away from the workpiece, the workpiece being a workpiece of a rotor core for the rotating electrical machine;
a setting step of, after the heating step, attaining a set state in which the orienting magnetic field application device is located closer to the workpiece than in the non-set state; and an injection molding step of, in the set state, filling the magnet hole in the workpiece with a material for a bonded magnet while applying an orienting magnetic field from the orienting magnetic field application device to the workpiece.

### Effects of the Invention

In the aspect, the present disclosure can reduce heat that is conducted to the orienting magnetic field application device out of heat generated by a heating device in order to heat the workpiece etc., during injection molding.

### BRIEF DESCRIPTION OF THE DRAWINGS

[FIG. 1] FIG. 1 is a sectional view schematically showing a sectional structure of a motor according to an embodiment.
[FIG. 2] FIG. 2 is a sectional view of a rotor (sectional view taken along a plane perpendicular to an axial direction).
[FIG. 3] FIG. 3 is an enlarged view of a portion related to one magnetic pole shown in FIG. 2.
[FIG. 4] FIG. 4 is a flowchart schematically showing the flow of a manufacturing method of the rotor according to a first embodiment.
[FIG. 5] FIG. 5 is an illustration of a clamping step in the manufacturing method shown in FIG. 4.
[FIG. 6] FIG. 6 is an illustration of a heating step in the manufacturing method shown in FIG. 4.
[FIG. 7] FIG. 7 is an illustration of a setting step (first diagram) in the manufacturing method shown in FIG. 4.
[FIG. 8] FIG. 8 is an illustration of the setting step (second diagram) in the manufacturing method shown in FIG. 4.
[FIG. 9] FIG. 9 is an illustration of an injection molding step in the case of single-pole orientation in the manufacturing method shown in FIG. 4.
[FIG. 10] FIG. 10 is an illustration of an injection molding step in the case of all-pole orientation in the manufacturing method shown in FIG. 4.
[FIG. 11] FIG. 11 is an illustration of a removing step in the manufacturing method shown in FIG. 4.
[FIG. 12] FIG. 12 is an illustration of one state of an orienting magnetic field application device of a manufacturing apparatus according to a modification.
[FIG. 13] FIG. 13 is an illustration of a set state of the orienting magnetic field application device of the manufacturing apparatus according to the modification.
[FIG. 14] FIG. 14 is an illustration of another state of the orienting magnetic field application device of the manufacturing apparatus according to the modification.
[FIG. 15] FIG. 15 is a flowchart schematically showing the flow of a manufacturing method of the rotor according to a second embodiment.
[FIG. 16] FIG. 16 is an illustration of a temperature raising step in the manufacturing method shown in FIG. 15.
[FIG. 17] FIG. 17 is an illustration of a placing step in the manufacturing method shown in FIG. 15.
[FIG. 18] FIG. 18 is an illustration of a mold closing step and a setting step in the manufacturing method shown in FIG. 15.
[FIG. 19] FIG. 19 is an illustration of an injection molding step in the manufacturing method shown in FIG. 15.
[FIG. 20] FIG. 20 is an illustration of a mold opening step and a withdrawing step in the manufacturing method shown in FIG. 15.
[FIG. 21] FIG. 21 is an illustration (first diagram) of a manufacturing method and manufacturing apparatus according to a third embodiment.
[FIG. 22] FIG. 22 is an illustration (second diagram) of the manufacturing method and manufacturing apparatus according to the third embodiment.
[FIG. 23] FIG. 23 is an illustration (third diagram) of the manufacturing method and manufacturing apparatus according to the third embodiment.

### MODES FOR CARRYING OUT THE INVENTION

Embodiments will be described in detail below with reference to the accompanying drawings. The dimensional ratios in the drawings are merely illustrative, and are not limited to these. The shapes etc. in the drawings may be partially exaggerated for convenience of description.

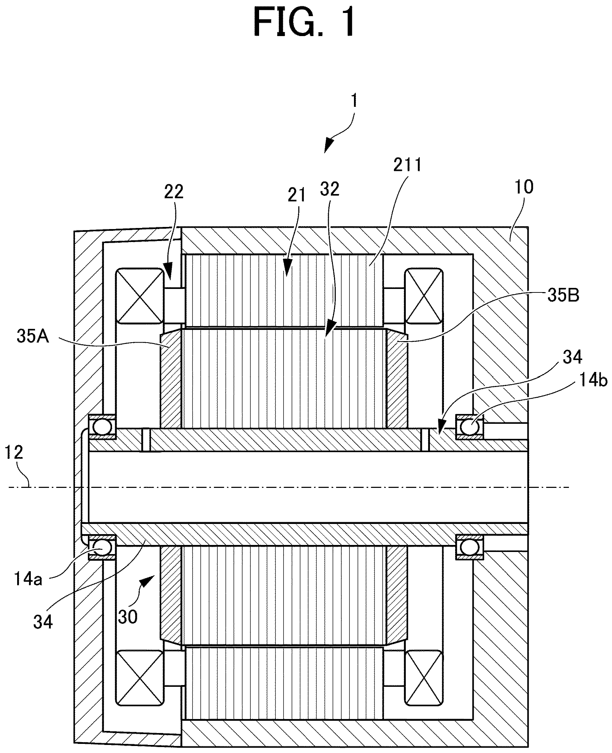

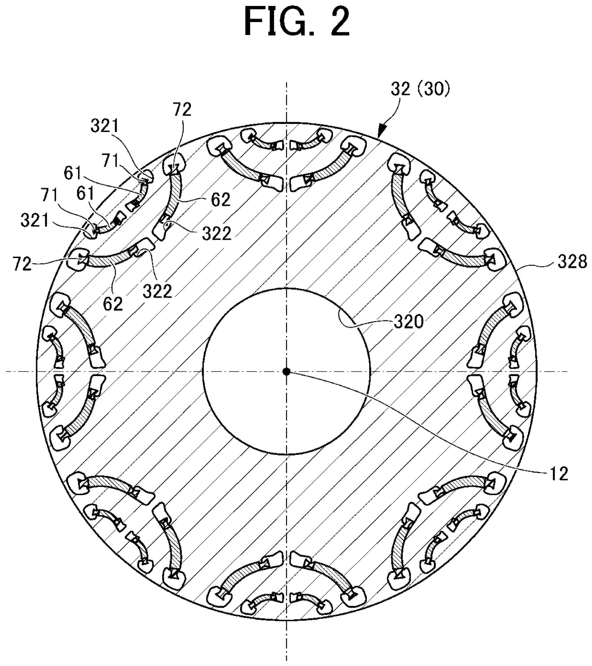

FIG. 1 is a sectional view schematically showing a sectional structure of a motor 1 according to an embodiment. FIG. 2 is a sectional view of a rotor 30 (sectional view taken along a plane perpendicular to an axial direction). For simplicity, in FIGS. 2 etc., not all of the portions having the same attribute may be denoted by reference signs.

FIG. 1 shows a rotation axis 12 of the motor 1. In the following description, the axial direction refers to a direction in which the rotation axis (rotation center) 12 of the motor 1 extends, and the radial direction refers to a radial direction about the rotation axis 12. Therefore, the "radially outer side" and "radially outward" refer to a side away from the rotation axis 12, and the "radially inner side" and "radially inward" refers to a side toward the rotation axis 12. The circumferential direction corresponds to a rotation direction about the rotation axis 12.

The motor 1 may be a vehicle drive motor that is used in, for example, a hybrid electric vehicle or a battery electric vehicle. The motor 1 may be used for any other purposes.

The motor 1 is of an inner rotor type, and a stator 21 is provided so as to surround the radially outer side of the rotor 30. The radially outer side of the stator 21 is fixed to a motor housing 10. The stator 21 includes a stator core 211 composed of, for example, annular magnetic steel laminations, and a plurality of slots (not shown) around which a coil 22 is wound is provided on the radially inner side of the stator core 211.

The rotor 30 is disposed radially inward of the stator 21.

The rotor 30 includes a rotor core 32, a rotor shaft 34, end plates 35A, 35B, and bonded magnets 61, 62.

The rotor core 32 is fixed to the radially outer surface of the rotor shaft 34 and rotates with the rotor shaft 34. The rotor core 32 has a shaft hole 320 (see FIG. 2), and the rotor shaft 34 is fitted in the shaft hole 320. The rotor shaft 34 is rotatably supported by the motor housing 10 via bearings 14a, 14b. The rotor shaft 34 defines the rotation axis 12 of the motor 1.

The rotor core 32 is composed of, for example, annular magnetic steel laminations. In a modification, the rotor core 32 may be made of a green compact obtained by pressing and compacting magnetic powder. The bonded magnets 61, 62 (see FIG. 2) are disposed inside the rotor core 32. That is, the rotor core 32 has magnet holes 321, 322 (see FIG. 2) extending through the rotor core 32 in the axial direction, and the bonded magnets 61, 62 are formed in the magnet holes 321, 322. Each of the plurality of bonded magnets 61, 62 is formed by injection molding a material for bonded magnets (hereinafter also simply referred to as "bonded magnet material") that is a mixture of magnet powder and a binder (e.g., a resin material). Any injection molding method may be used, and examples of the injection molding method include transfer molding and resin injection by compression molding using a cylinder. A method for forming the bonded magnets will be described in detail in relation to the manufacturing method described below.

As shown in FIG. 2, the rotor core 32 has a rotationally symmetric form about the rotation axis 12 as viewed in the axial direction. In the example shown in FIG. 2, the rotor core 32 has a form in which the bonded magnets 61, 62 of individual sets overlap every time the rotor core 32 rotates 45 degrees about the rotation axis 12.

In the example shown in FIG. 2, the plurality of bonded magnets 61, 62 that is of two types is arranged in pairs of bonded magnets 61 and pairs of bonded magnets 62 such that each pair forms a generally V-shape (generally V-shape that is open on its radially outer side) as viewed in the axial direction. In this case, a common magnetic pole is formed between a pair of bonded magnets 61 and between a pair of bonded magnets 62. The plurality of bonded magnets 61, 62 is arranged in such a manner that S poles and N poles appear alternately in the circumferential direction. In the present embodiment, the number of magnetic poles is eight, but the number of magnetic poles may be set as desired.

Although FIG. 1 shows the motor 1 having a specific structure, the structure of the motor 1 is not limited to such a specific structure. For example, in FIG. 1, the rotor shaft 34 is hollow. However, the rotor shaft 34 may be solid.

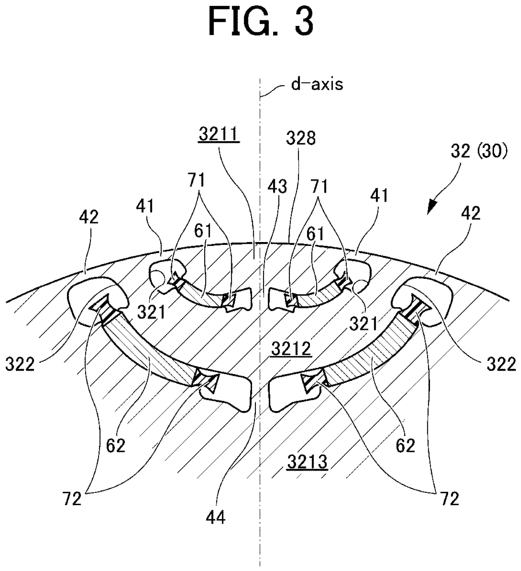

Next, the rotor core 32 and the bonded magnets 61, 62 will be described in more detail with reference to FIG. 3 and the subsequent figures. Although the configuration related to one magnetic pole will be described below, the same may apply to the configurations related to the other magnetic poles.

FIG. 3 is an enlarged view of a portion related to one magnetic pole shown in FIG. 2. The configuration related to one magnetic pole is basically symmetrical with respect to a d-axis. Hereinafter, the outer side in the circumferential direction refers to the side away from the d-axis.

The rotor core 32 has the radially outer magnet holes 321 (hereinafter also referred to as "first magnet holes 321") and the radially inner magnet holes 322 (hereinafter also referred to as "second magnet holes 322").

The first magnet holes 321 are provided in a pair such that the two first magnet holes 321 of the pair form a generally V-shape (generally V-shape that opens radially outward). In a modification, the first magnet holes 321 may be provided in a pair such that the two first magnet holes 321 of the pair form a straight line, or only one of the first magnet holes 321 may form a straight line (straight line perpendicular to the d-axis). A bonded magnet 61 is provided in each of the first magnet holes 321. Each of the first magnet holes 321 has clearances (voids) at both longitudinal ends of the bonded magnet 61. These clearances function as flux barrier portions. A non-magnetic element 71 may be disposed in each of the clearances of the flux barrier portions. In this case, the non-magnetic elements 71 may be provided adjacent to the bonded magnet 61.

The second magnet holes 322 are provided radially inward of the first magnet holes 321. The second magnet holes 322 are provided in a pair such that the two second magnet holes 322 of the pair form a generally V-shape (generally V-shape that opens radially outward). The pair of second magnet holes 322 extends over a wider range in the circumferential direction than the pair of first magnet holes 321. A bonded magnet 62 is provided in each of the second magnet holes 322. Each of the second magnet holes 322 has clearances (voids) at both longitudinal ends of the bonded magnet 62. These clearances function as flux barrier portions. A non-magnetic element 72 may be disposed in each of the clearances of the flux barrier portions. The non-magnetic elements 72 may be provided adjacent to the bonded magnet 62. The configuration itself of the non-magnetic element 72 may be the same as that of the non-magnetic element 71 described above.

Since the rotor core 32 has such first magnet holes 321 and second magnet holes 322, the rotor core 32 has three portions 3211, 3212, and 3213 connected in the radial direction only via bridge portions (hereinafter also referred to as "first portion 3211," "second portion 3212," and "third portion 3213").

Specifically, the first portion 3211 extends radially outward of the first magnet holes 321. The first portion 3211 forms part of an outer peripheral surface 328 of the rotor core 32.

The second portion 3212 extends between the second magnet holes 322 and the first magnet holes 321 such that both sides in the circumferential direction of the second portion 3212 extend to the outer peripheral surface 328 of the rotor core 32. The second portion 3212 forms part of the outer peripheral surface 328 of the rotor core 32 on both sides in the circumferential direction of the first portion 3211. The second portion 3212 forms a magnetic path for q-axis magnetic flux. Specifically, the q-axis magnetic flux flows between the second magnet holes 322 and the first magnet holes 321 from one end toward the other end of the second portion 3212.

The third portion 3213 extends radially inward of the second magnet holes 322 such that both sides in the circumferential direction of the third portion 3213 extend to the outer peripheral surface 328 of the rotor core 32. The third portion 3213 forms part of the outer peripheral surface 328 of the rotor core 32 on both sides in the circumferential direction of the second portion 3212.

Since the rotor core 32 has such three portions 3211, 3212, and 3213, the rotor core 32 has a plurality of bridge portions 41, 42, 43, and 44 connecting the three portions 3211, 3212, and 3213.

The bridge portions 41 (hereinafter also referred to as "first bridge portions 41") support the first portion 3211 radially outward of the second portion 3212. The first bridge portions 41 are provided in a pair on both sides in the circumferential direction of (circumferentially outward of) the first portion 3211. The first bridge portions 41 extend between the outer peripheral surface 328 of the rotor core 32 and the first magnet holes 321.

The bridge portions 42 (hereinafter also referred to as "second bridge portions 42") support the second portion 3212 radially outward of the third portion 3213. The second bridge portions 42 are provided in a pair on both sides in the circumferential direction of (circumferentially outward of) the second portion 3212. The second bridge portions 42 extend between the outer peripheral surface 328 of the rotor core 32 and the second magnet holes 322.

The bridge portion 43 supports the first portion 3211 on the d-axis with respect to the second portion 3212.

The bridge portion 44 supports the second portion 3212 on the d-axis with respect to the third portion 3213.

The configuration of the rotor core 32 related to the bonded magnets 61, 62 may be any configuration and is not limited to the configuration shown in FIGS. 2 and 3. For example, the bonded magnets 61, 62 are provided in the example shown in FIGS. 2 and 3. However, either the bonded magnets 61 or the bonded magnets 62 may be omitted. Alternatively, additional bonded magnets may be disposed radially inward of the bonded magnets 62 such that the third portion 3213 forms a magnetic path for the q-axis magnetic flux.

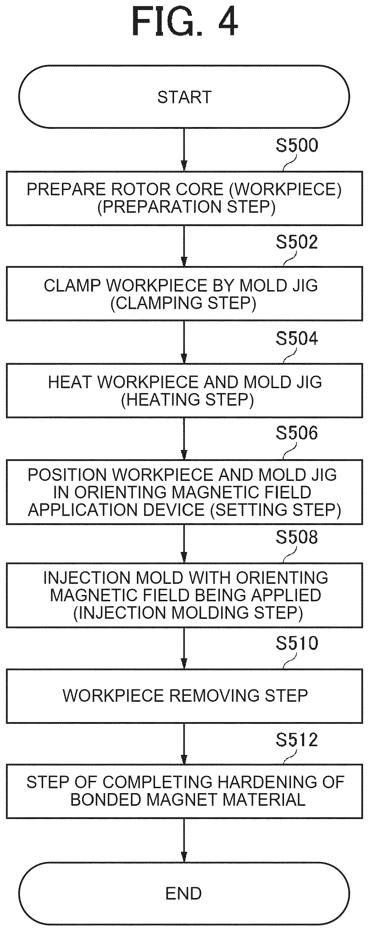

Next, a manufacturing method of the rotor core 32 described above and a manufacturing apparatus 100 will be described in detail with reference to FIG. 4 and the subsequent figures. In the following description, equipment refers to equipment on which the manufacturing apparatus 100 is installed, and is typically equipment in a factory etc. In the following description, of various constituent elements of the manufacturing apparatus 100, a fixed type element refers to an element fixed so as to be immovable with respect to the equipment during operation related to the manufacturing method. However, this element may be movable for maintenance etc. The fixed type element need not necessarily be entirely fixed. A part of the fixed element may be movable with respect to a fixed part of the fixed element. Of the constituent elements of the manufacturing apparatus 100, a movable type element refers to an element that entirely moves with respect to the equipment during operation related to the manufacturing method. The equipment need not necessarily be fixed to the ground, and may be movable with respect to the ground.

In the following description, as described above, the axial direction refers to a direction in which the central axis of the rotor core 32 (workpiece W) corresponding to the rotation axis 12 of the motor 1 extends, and the radial direction refers to a radial direction about the central axis of the rotor core 32. The circumferential direction corresponds to a rotation direction about the central axis of the rotor core 32.

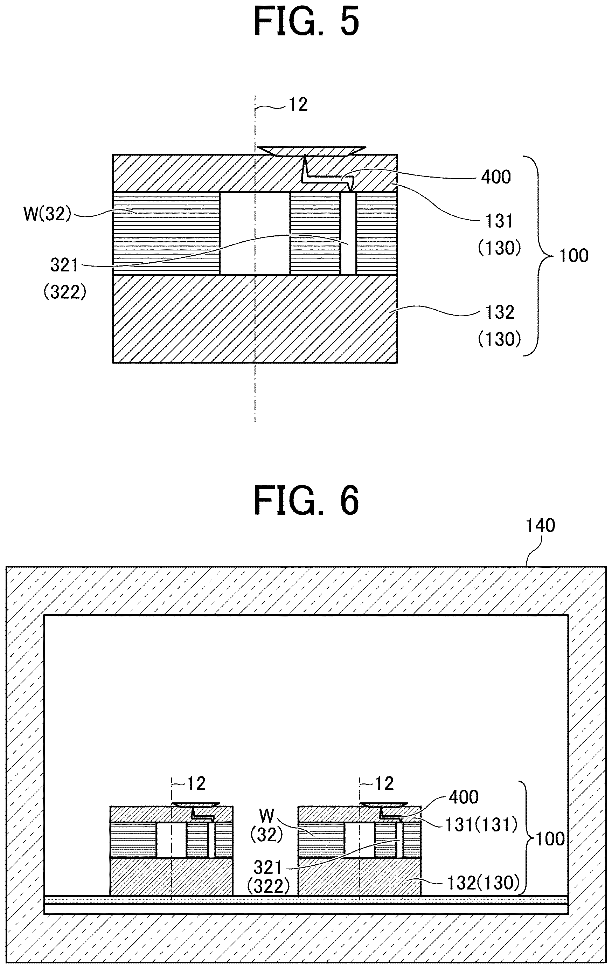

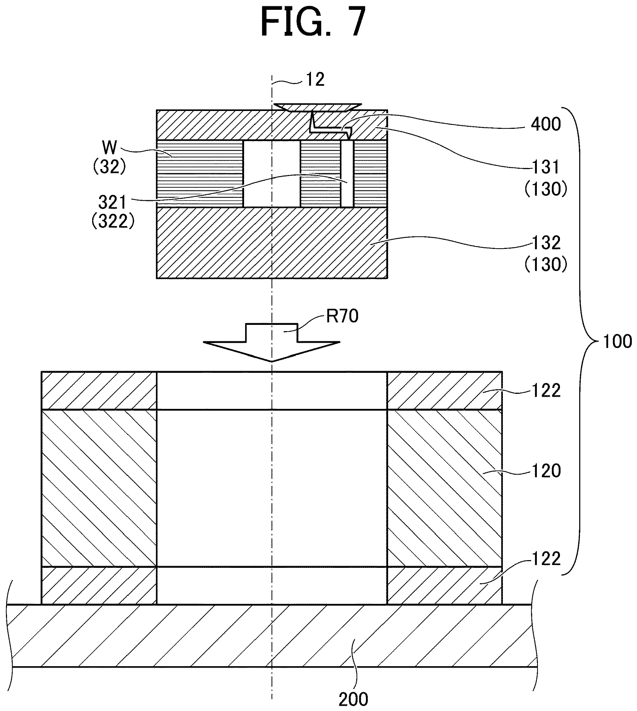

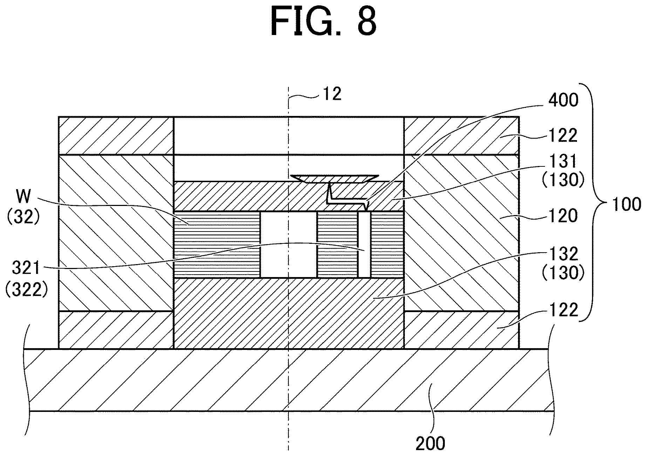

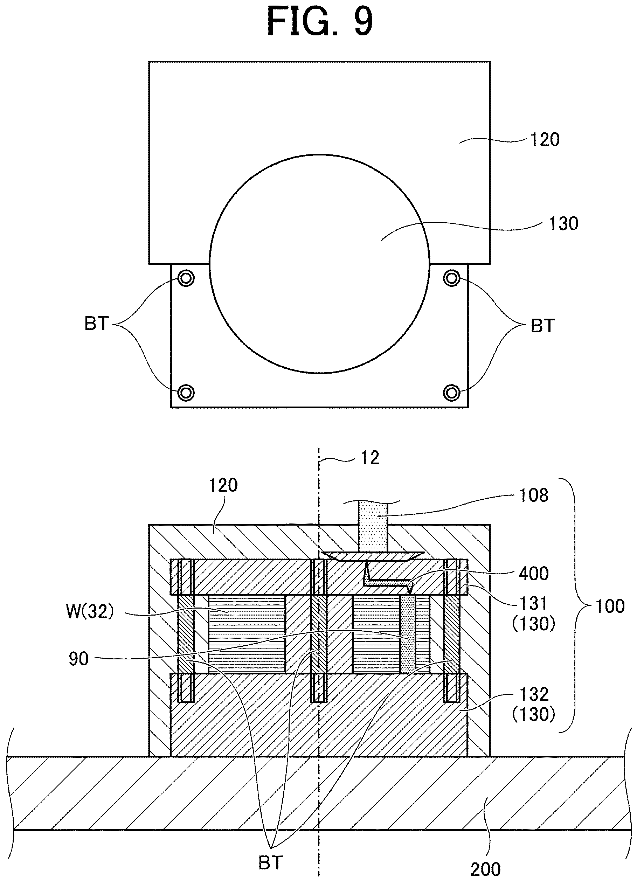

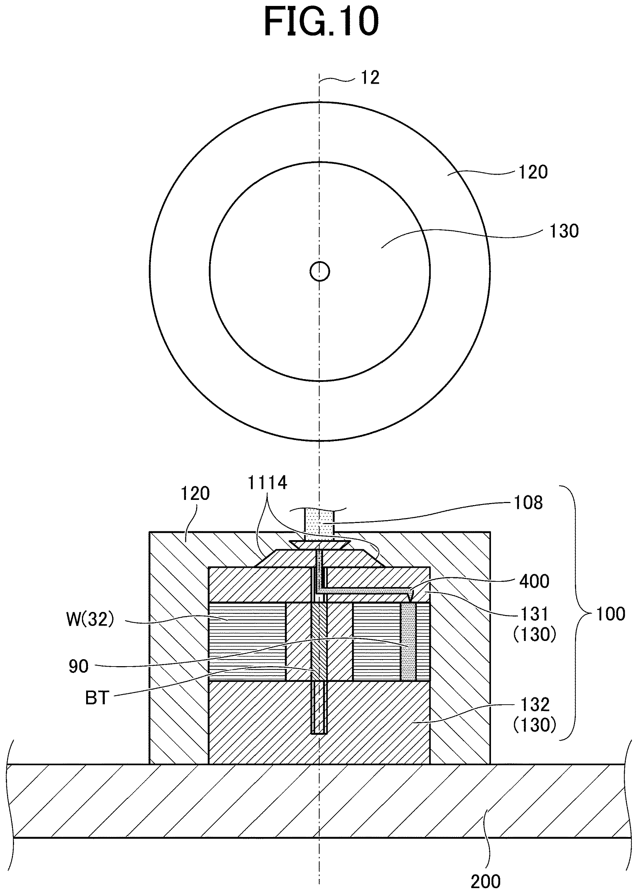

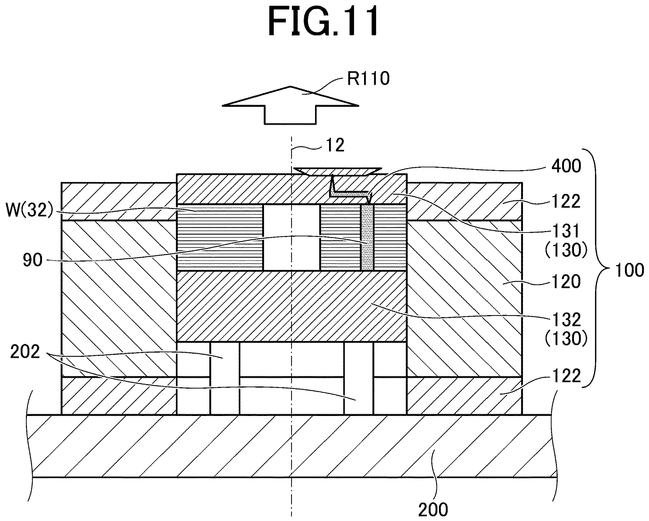

FIG. 4 is a flowchart schematically showing the flow of a manufacturing method of the rotor 30 according to the present embodiment. FIGS. 5 to 11 are illustrations of specific steps in the manufacturing method shown in FIG. 4. Specifically, FIG. 5 is an illustration of a clamping step, FIG. 6 is an illustration of a heating step, and FIGS. 7 and 8 are illustrations of a setting step. FIG. 9 is an illustration of an injection molding step in the case of single-pole orientation, and FIG. 10 is an illustration of an injection molding step in the case of all-pole orientation. FIG. 11 is an illustration of a removing step.

The manufacturing method first includes a preparation step of preparing a workpiece W of the rotor core 32 (step S500). As described above, the rotor core 32 has the magnet holes 321, 322. The preparation step may further include a step of placing the non-magnetic elements 71, 72 in the magnet holes 321, 322. In this case, the workpiece W includes the rotor core 32 and the non-magnetic elements 71, 72.

Next, the manufacturing method includes a clamping step (example of the holding step) of clamping the rotor core 32 (workpiece W) by a mold jig 130 (step S502). FIG. 5 schematically shows the rotor core 32 clamped by the mold jig 130 in section (in section taken along a plane passing through the rotation axis 12; the same applies below).

In the present embodiment, the mold jig 130 includes an upper jig 131 and a lower jig 132, and the rotor core 32 is clamped between the upper jig 131 and the lower jig 132. The upper jig 131 and the lower jig 132 may be able to fasten in the axial direction. In this case, the upper jig 131 and the lower jig 132 can apply an axial (direction along the rotation axis 12) pressing force to the rotor core 32. The upper jig 131 may function as an injection mold and may have a path 400 through which a bonded magnet material 90 from an injection molding device 108 (see FIG. 9 etc.) passes. The path 400 may be in the form of a runner or a gate. The mold jig 130 may have a sprue etc. with which a nozzle (not shown) of an injection molding machine communicates.

The mold jig 130 is of a movable type (i.e., movable with respect to the equipment) and is movable between a set position in which the mold jig 130 is set with respect to an orienting magnetic field application device 120 described below and a non-set position where the mold jig 130 is located away from the orienting magnetic field application device 120. Movement of the mold jig 130 may be implemented by a robot etc., or may be implemented by a conveyor etc.

The manufacturing method then includes a heating step of heating the rotor core 32 (workpiece W) after the rotor core 32 is set in the mold jig 130 (step S504). FIG. 6 schematically shows in section the rotor core 32 being heated in a heating furnace 140. The heating step may be implemented by any heating device other than the heating furnace 140 (e.g., an induction heating device). The heating device such as the induction heating device may be contained in the mold jig 130 itself. In this case, the temperature of the mold jig 130 together with the temperature of the rotor core 32 can be raised to a suitable temperature in an injection molding step described below.

The manufacturing method subsequently includes a setting step of attaining a state in which the orienting magnetic field application device 120 is in contact with the radially outer side of the workpiece W (hereinafter also referred to as "set state") (step S506). That is, the manufacturing method includes a setting step of moving the workpiece W from the non-set position to the set position. The orienting magnetic field application device 120 can apply an orienting magnetic field to the workpiece W in the set state. The orienting magnetic field acts on the bonded magnet material 90 injected in the injection molding step described below. That is, the orienting magnetic field serves to orient magnetic components in the bonded magnet material 90 and cause the bonded magnet material 90 to function as a magnet (bonded magnets 61, 62). In the set state, the orienting magnetic field application device 120 is in contact with the radially outer side of the workpiece W. However, the orienting magnetic field application device 120 may face the radially outer side of the workpiece W with small clearance therebetween (face the workpiece W in the radial direction).

FIGS. 7 and 8 are illustration of the setting step, schematically showing in section how the workpiece W transitions to the set state. In the example shown in FIGS. 7 and 8, the workpiece W is lowered together with the mold jig 130 (see arrow R70) to transition to the set state. That is, the workpiece W clamped by the mold jig 130 is lowered together with the mold jig 130 (see arrow R70) and thus positioned with respect to the orienting magnetic field application device 120. The operation of lowering the workpiece W may be implemented by a robot etc.

The orienting magnetic field application device 120 may be of a fixed type, and may be installed (fixed) on equipment 200 as shown in FIGS. 7 and 8. The orienting magnetic field application device 120 contacts the workpiece W along the entire axial length of the workpiece W. The orienting magnetic field application device 120 may have an axial length that is significantly greater than the overall axial length of the workpiece W. The orienting magnetic field application device 120 may have non-magnetic portions 122 at both ends (upper and lower ends) in the axial direction.

The orienting magnetic field application device 120 may have any configuration as long as it can generate the orienting magnetic field. For example, the orienting magnetic field application device 120 may be in the form of an orientation yoke having a relatively large heat capacity. The orienting magnetic field application device 120 may contain a permanent magnet for generating the orienting magnetic field. The orienting magnetic field application device 120 preferably contains an electromagnet (not shown) so that generation of the orienting magnetic field can be started and stopped. In this case, as described below, by turning off the electromagnet when moving the mold jig 130 from the set position to the non-set position, a force required for this movement becomes relatively small. Therefore, the equipment can be simplified.

The manufacturing method subsequently includes an injection molding step of filling the magnet holes 321, 322 with the bonded magnet material 90 by the injection molding device 108 (step S508). The injection molding step is performed with the orienting magnetic field being applied from the orienting magnetic field application device 120 to the workpiece W in the set state described above. The orienting magnetic field may continue to be applied until the subsequent removing step (step S510).

Such orientation by the orienting magnetic field application device 120 may be implemented for only one pole, or may be implemented for all poles. Hereinafter, a case where orientation is performed for only one pole will also be referred to as "case of single-pole orientation," and a case where orientation is performed for all poles will also be referred to as "case of all-pole orientation."

FIG. 9 schematically shows two views of the state in the injection molding step in the case of single-pole orientation. The upper view is a top view, and the lower view is a side view (in section). In the case of single-pole orientation, the orienting magnetic field application device 120 may contact a semicircular portion of the workpiece W in the radial direction, as shown in FIG. 9. In this case, as shown in FIG. 9, bolts BT for fastening the mold jig 130 (i.e., bolts BT for applying an axial pressing force between the upper jig 131 and the lower jig 132) can be set over a relatively wide range where the orienting magnetic field application device 120 is not located. This can effectively reduce the possibility of the bonded magnet material 90 leaking out from between layers of the workpiece W (between steel laminations) during injection molding even when the injection pressure is increased. As a result, it is possible to use a bonded magnet material that has relatively low fluidity (and therefore needs to be injected at a relatively high injection pressure) but has good magnetic properties (e.g., a bonded magnet material with a high magnetic powder content), which can also improve the magnetic properties of the motor 1.

FIG. 10 schematically shows two views of the state in the injection molding step in the case of all-pole orientation. The upper view is a top view, and the lower view is a side view (in section). In the case of all-pole orientation, the orienting magnetic field application device 120 may contact the workpiece W along the entire circumference of the workpiece W in the radial direction, as shown in FIG. 10. In this case, as shown in FIG. 10, a bolt BT for fastening the mold jig 130 may be set near the rotation axis 12. In this case, the bolt-fastened portion may have a tapered surface 1114 so that the pressing force of the bolt BT is also transmitted to the outer periphery of the workpiece W (i.e., so that an axial force is also generated in the outer periphery of the workpiece W). This can effectively reduce the possibility of the bonded magnet material 90 leaking out from between layers of the workpiece W (between steel laminations) during injection molding even when the injection pressure is increased, as in the case of the configuration shown in FIG. 9.

The manufacturing method subsequently includes a removing step of moving the workpiece W that has been filled with the bonded magnet material 90 to a position away from the orienting magnetic field application device 120 (step S510). That is, the manufacturing method includes a workpiece W removing step of moving the workpiece W from the set position to the non-set position (step S510). The removing step (step S510) may be started when the bonded magnet material 90 filling the workpiece W has substantially lost its fluidity (i.e., when orientation is maintained even if the orienting magnetic field is no longer applied from the orienting magnetic field application device 120). The non-set position may be either the same as or different from the non-set position that is an original position in the setting step described above. FIG. 11 schematically shows in section the state of the workpiece W during removal. In this case, the workpiece W may be lifted by being ejected upward by ejector pins 202 or similar member (e.g., a workpiece ejector) of the equipment (see arrow R110). Alternatively, the workpiece W may be held and lifted by a robot (not shown). The workpiece W can thus be removed by any method.

The manufacturing method subsequently includes a step of completing hardening of the bonded magnet material 90 by heating the removed workpiece W (step S512). This step may be omitted as appropriate.

As described above, according to the manufacturing method and the manufacturing apparatus 100, the workpiece W is heated together with the mold jig 130 in the heating step before the injection molding step. Therefore, the heated workpiece W can be filled with the bonded magnet material 90 via the heated mold jig 130. This allows the workpiece W to be filled with the bonded magnet material 90 in a desired flow condition. The temperature that the workpiece W and the mold jig 130 reach through the heating step (temperature after being raised) may be determined according to a target temperature to be achieved in the injection molding step.

In particular, according to the manufacturing method and the manufacturing apparatus 100, the heating step for the workpiece W is performed on the workpiece W located away from the orienting magnetic field application device 120 (e.g., the workpiece W placed in the heating furnace 140). This can prevent disadvantages that occur when the heating step is performed on the workpiece W in the set state, namely the workpiece W set with respect to the orienting magnetic field application device 120. In other words, when the heating step is performed on the workpiece W in the set state, namely the workpiece W set with respect to the orienting magnetic field application device 120, not only the thermal efficiency is poor, but also the orienting magnetic field application device 120 may not be able to generate a relatively strong magnetic field for magnetic field orientation due to the high temperature of the orienting magnetic field application device 120, as described above in the section "Problem to be Solved by the Invention." On the other hand, according to the manufacturing method and the manufacturing apparatus 100, the thermal efficiency is good, and the orienting magnetic field application device 120 can stably generate a relatively strong magnetic field for magnetic field orientation, as described above.

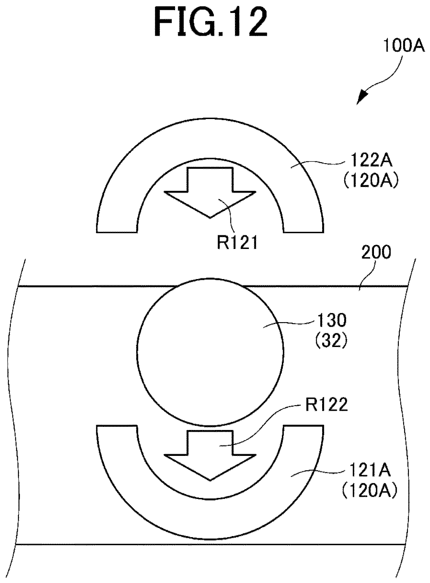

In the manufacturing method and manufacturing apparatus 100 described above with reference to FIGS. 5 to 11, the mold jig 130 moves together with the workpiece W between the non-set position and the set position with respect to the fixed type orienting magnetic field application device 120. However, for example, a part of the orienting magnetic field application device may be movable, as in the following modification shown in FIGS. 12 to 14.

In the manufacturing method described above with reference to FIGS. 5 to 11, when the heating device used in the heating step (step S504) is a heating device contained in the mold jig 130, heating by the heating device may also be performed during the injection molding step (step S508). In this case, heating by the heating device may be performed in order to keep the mold jig 130 (and the workpiece W) at a desired temperature. The heating in this case is intended to maintain or slightly increase the temperature of the mold jig 130 that has already been heated in the heating step (step S504), and therefore requires less energy than in the case where there is no heating step (step S504). Accordingly, loss due to heat transfer the orienting magnetic field application device 120 is small, so that the above effects of the embodiment can still be obtained.

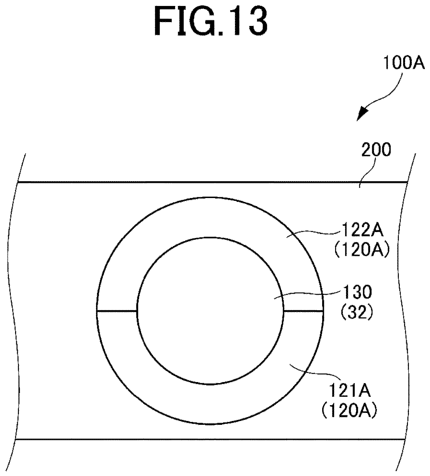

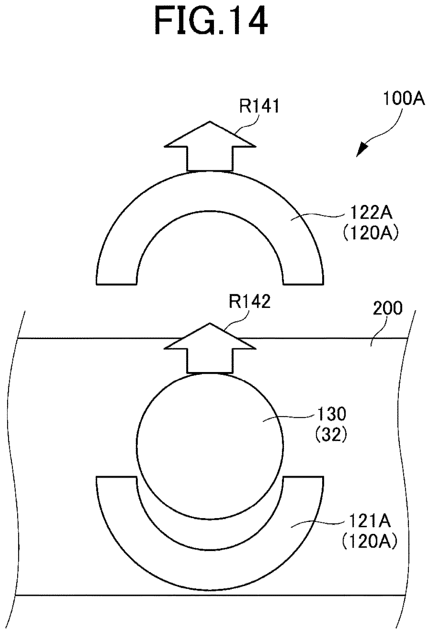

FIGS. 12 to 14 are illustrations of an orienting magnetic field application device 120A of a manufacturing apparatus 100A according to a modification, schematically showing in top views the states during specific steps of the manufacturing method. Specifically, FIG. 12 is an illustration of the setting step, FIG. 13 is an illustration of the injection molding step (set state), and FIG. 14 is an illustration of the removing step.

In the modification shown in FIGS. 12 to 14, the orienting magnetic field application device 120A includes a first orientation yoke 121A and a second orientation yoke 122A. The first orientation yoke 121A and the second orientation yoke 122A are generally in a cylindrical shape. The second orientation yoke 122A is movable in the radial direction with respect to the first orientation yoke 121A. Specifically, the second orientation yoke 122A is movable between a non-set position where the second orientation yoke 122A is located away from the first orientation yoke 121A in the radial direction and a set position where the second orientation yoke 122 contacts or is located near the first orientation yoke 121A in the radial direction. When the workpiece W is in the set state with respect to the orienting magnetic field application device 120A (when the second orientation yoke 122Ais in the set position), the first orientation yoke 121A and the second orientation yoke 122A contacts the workpiece W along the entire axial length and entire circumference of the workpiece W, as in the case of the orienting magnetic field application device 120 of the above embodiment.

A manufacturing method similar to the manufacturing method described above with reference to FIG. 4 can be applied to this modification. In this modification, however, the second orientation yoke 122A waits in the non-set position before the setting step (step S506) following the heating step of heating the rotor core 32 (workpiece W) (step S504). The heating step of heating the rotor core 32 (workpiece W) (step S504) is performed on the rotor core 32 thermally separated from the orienting magnetic field application device 120A, as in the manufacturing method described above with reference to FIG. 4. In this modification, in the setting step (step S506), as schematically shown in FIG. 12, the rotor core 32 (workpiece W) is positioned with respect to the first orientation yoke 121A (see arrow R122), and the second orientation yoke 122A is positioned with respect to the first orientation yoke 121A (see arrow R121). That is, the second orientation yoke 122A is moved from the non-set position to the set position. In this modification, the second orientation yoke 122A is movable in the radial direction. However, the second orientation yoke 122A may be movable in the axial direction in addition to, or instead of, the radial direction. In this case as well, the non-set position of the second orientation yoke 122A may be set to a position where there is no possibility of interference with movement of the rotor core 32 (workpiece W) when positioning the rotor core 32 with respect to the first orienting yoke 121A. In the set state, as in the manufacturing method described above with reference to FIG. 4, the first and second orientation yokes 121A, 122A together surround the rotor core 32 as shown in FIG. 13. After the injection molding step ends, the removing step (step S510) is performed. In the removing step (step S510), as schematically shown in FIG. 14, the second orientation yoke 122A is moved to the non-set position away from the first orientation yoke 121A (see arrow R141), and the rotor core 32 (workpiece W) is moved to a position away from the first orientation yoke 121A (see arrow R142).

This modification also provides the same effects as those of the manufacturing method and manufacturing apparatus 100 described above with reference to FIG. 4. According to this modification, moving the second orientation yoke 122A from the non-set position to the set position immediately before the injection molding step can also minimize heat transfer from the rotor core 32 (workpiece W) to the second orientation yoke 122A that may occur before the injection molding step is performed.

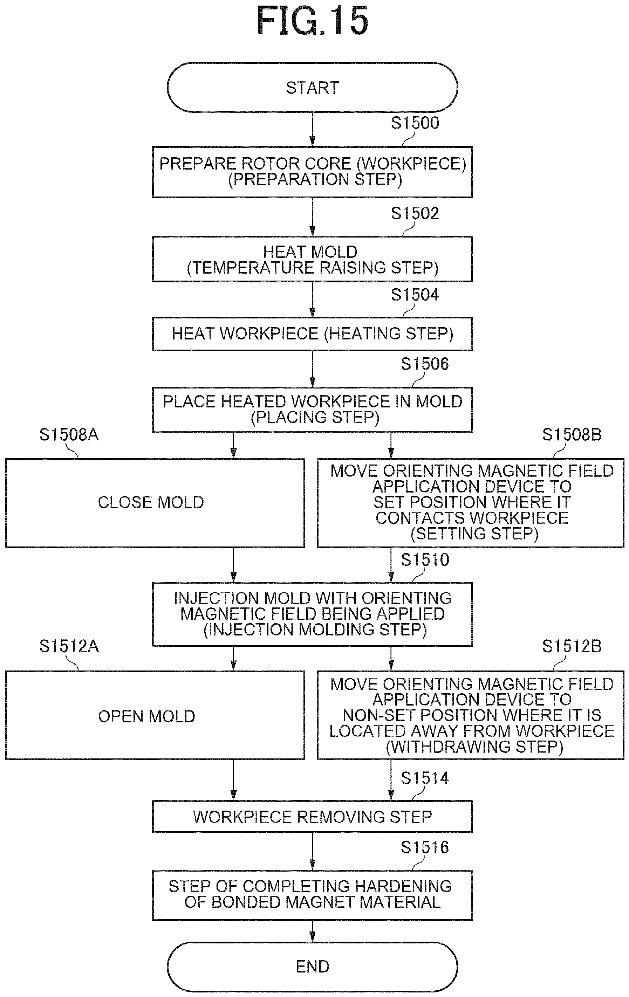

Next, a manufacturing method and manufacturing apparatus 100B according to another embodiment (hereinafter also referred to as "second embodiment") different from the embodiment described above (hereinafter also referred to as "first embodiment" for distinction) will be described with reference to FIG. 15 and the subsequent figures.

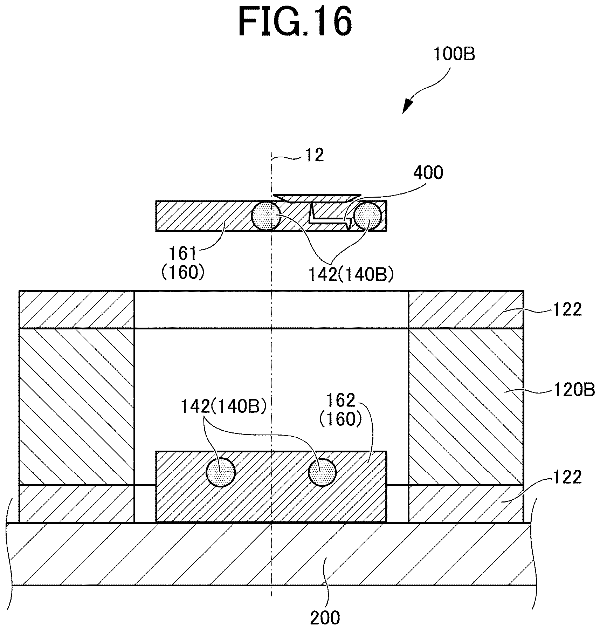

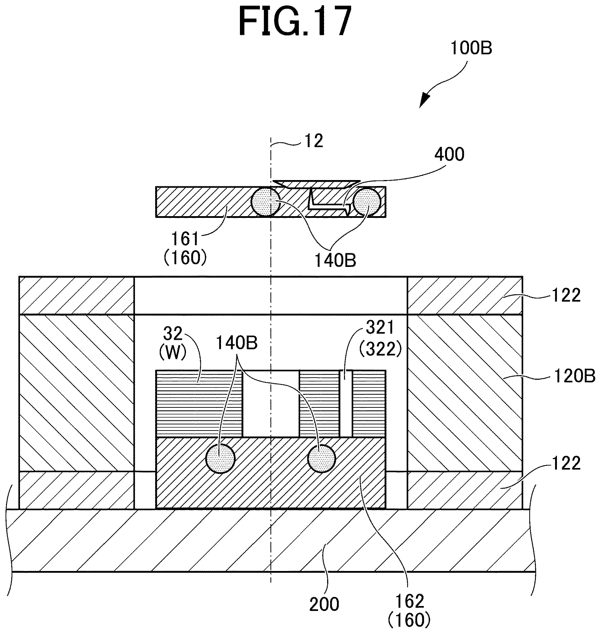

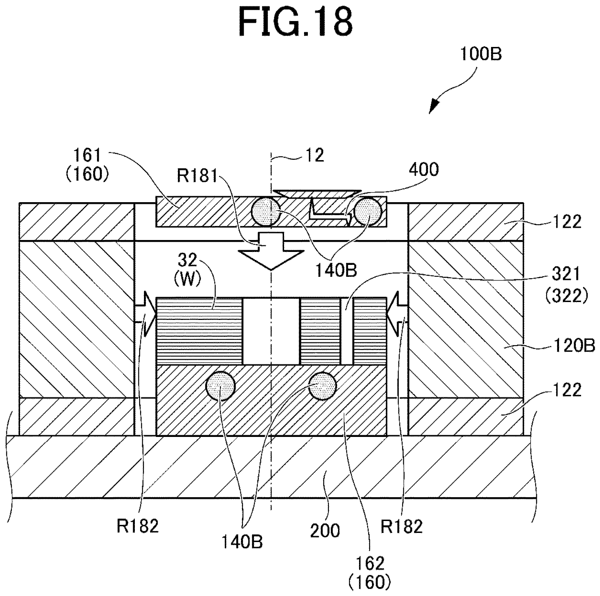

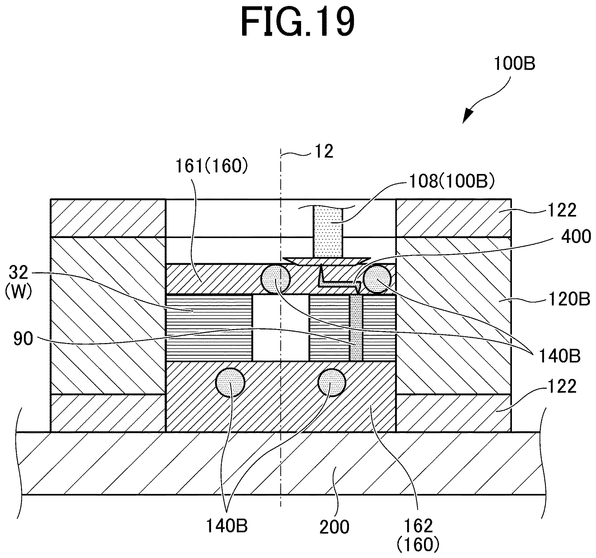

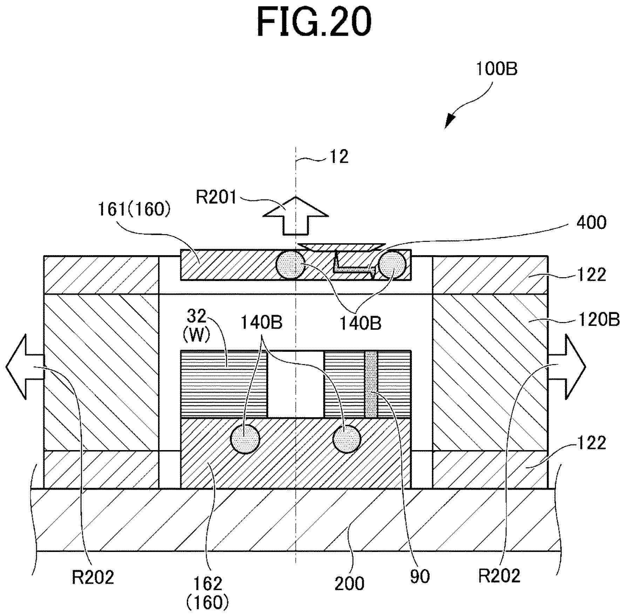

FIG. 15 is a flowchart schematically showing the flow of a manufacturing method of the rotor 30 according to the present embodiment (second embodiment). FIGS. 16 to 20 are illustrations of specific steps in the manufacturing method shown in FIG. 15. Specifically, FIG. 16 is an illustration of a temperature raising step, FIG. 17 is an illustration of a placing step, FIG. 18 is an illustration of a mold closing step and a setting step, FIG. 19 is an illustration of an injection molding step, and FIG. 20 is an illustration of a mold opening step and a withdrawing step.

The manufacturing apparatus 100B according to the present embodiment is different from the manufacturing apparatus 100 according to the first embodiment described above in that the mold jig 130 is replaced with a mold 160 and the orienting magnetic field application device 120 is replaced with an orienting magnetic field application device 120B. The manufacturing apparatus 100B according to the present embodiment is also different from the manufacturing apparatus 100 according to the first embodiment described above in that a heating device 140B is added. In the present embodiment, constituent elements that may be substantially the same as those in the first embodiment described above may be denoted by the same reference signs as those of the first embodiment, and description thereof may be omitted.

Hereinafter, the manufacturing method shown in FIG. 15 will be described along with the manufacturing apparatus 100B.

The manufacturing method first includes a preparation step of preparing a workpiece W of the rotor core 32 (step S1500). The preparation step (step S1500) may be the same as the preparation step (step S500) according to the first embodiment described above.

The manufacturing method then includes a temperature raising step of raising the temperature of (heating) the mold 160 (step S1502). In the present embodiment, as schematically shown in FIG. 16, the mold 160 may contain a heater 142 of the heating device 140B. The heater 142 may be contained in each of a movable upper mold 161 and a fixed lower mold 162. The heater 142 may be in the form of an induction heating device.

In the present embodiment, the orienting magnetic field application device 120B is of a movable type, and is movable between a non-set position where the orienting magnetic field application device 120 is thermally separated from the mold 160 and a set position. The orienting magnetic field application device 120B is kept in the non-set position in the temperature raising step (step S1502). Therefore, heat from the heating device 140B will not be transferred to the orienting magnetic field application device 120B via the mold 160 during the temperature raising step (step S1502), so that the thermal efficiency of the temperature raising step (step S1502) can be improved.

The manufacturing method then includes a heating step of heating the rotor core 32 (workpiece W) (step S1504). The heating step (step S1504) may be performed using the heating furnace 140, like the heating step (step S504) according to the first embodiment described above with reference to FIG. 6. The heating step may be implemented by any heating device other than the heating furnace 140 (e.g., an induction heating device). When any heating device other than the heating furnace 140 is used, the heating step (step S1504) may be performed at such a position that heat will not substantially be transferred to the orienting magnetic field application device 120B. Therefore, heat from the heating device will not be substantially transferred to the orienting magnetic field application device 120B during the heating step (step S1504), so that the thermal efficiency of the heating step (step S1504) can be improved.

The heating step (step S1504) may be performed in parallel with the temperature raising step (step S1502) described above.

The manufacturing method subsequently includes a placing step of positioning (placing) the heated workpiece W with respect to the mold 160 that is in an open state (step S1506). FIG. 17 shows the workpiece W positioned with respect to the mold 160. At this time, the orienting magnetic field application device 120B is still kept in the non-set position. The space around the mold 160 is thus open, which improves workability when positioning the workpiece W with respect to the mold 160. It is also possible to minimize heat transfer from the rotor core 32 (workpiece W) to the orienting magnetic field application device 120B that may occur before an injection molding step is performed.

The manufacturing method subsequently includes a mold closing step of changing the mold 160 from the open state to a closed state (step S1508A) and a setting step of moving the orienting magnetic field application device 120B from the non-set position to the set position (step S1508B), as shown by arrows R181, R182 in FIG. 18. A state in which the orienting magnetic field application device 120B is in contact with the radially outer side of the workpiece W (set state) is attained by performing the setting step, as in the setting step (step S506) of the first embodiment described above with reference to FIGS. 7 and 8. From the standpoint of efficiency, the mold closing step (step S1508A) and the setting step (step S1508B) are preferably performed in parallel. However, these steps may be performed separately with a time lag. For example, when the time required for the mold closing step (step S1508A) is longer than the time required for the setting step (step S1508B), the start time of the setting step (step S1508B) may be delayed so that the mold closing step (step S1508A) and the setting step (step S1508B) are completed at the same time. In this case, moving the orienting magnetic field application device 120B from the non-set position to the set position immediately before the subsequent injection molding step (step S1510) can also minimize heat transfer from the rotor core 32 (workpiece W) to the orienting magnetic field application device 120B that may occur before the injection molding step is performed.

The manufacturing method subsequently includes an injection molding step of filling the magnet holes 321, 322 with the bonded magnet material 90 by the injection molding device 108 (step S1510), as schematically shown in FIG. 19. The injection molding step is performed with an orienting magnetic field being applied from the orienting magnetic field application device 120 to the workpiece W in the set state described above. The orienting magnetic field may continue to be applied until the subsequent withdrawing step (step S1512B).

In the present embodiment, the upper mold 161 of the mold 160 may function as an injection mold and may have the path 400 through which the bonded magnet material 90 from the injection molding device 108 (see FIG. 9 etc.) passes.

The manufacturing method subsequently includes a mold opening step of changing the mold 160 from the closed state to the open state (step S1512A) and a withdrawing step of moving the orienting magnetic field application device 120B from the set position to the non-set position (step S1512B), as shown by arrows R201, R202 in FIG. 20. From the standpoint of efficiency, the mold opening step (step S1512A) and the withdrawing step (step S1512B) are preferably performed in parallel. However, these steps may be performed separately with a time lag.

The manufacturing method subsequently includes a removing step of removing the workpiece W from the mold 160 when the bonded magnet material 90 has hardened to a certain extent (step S1514). When the bonded magnet material 90 has hardened to a certain extent may correspond to when the bonded magnet material 90 filling the workpiece W has substantially lost its fluidity (i.e., when orientation is maintained even if the orienting magnetic field is no longer applied from the orienting magnetic field application device 120). The removing step may be implemented by a robot etc.

The manufacturing method subsequently includes a step of completing hardening of the bonded magnet material 90 by heating the removed workpiece W (step S1516). This step may be omitted as appropriate.

The present embodiment also has the same effects as those of the above embodiment.

In particular, according to the manufacturing method and the manufacturing apparatus 100B, the temperature raising step (step S1502) for the mold 160 and the heating step (step S1504) for the workpiece W are performed with the orienting magnetic field application device 120B being in the non-set position. This can prevent disadvantages that occur when the temperature raising step and the heating step are performed with the orienting magnetic field application device 120B being in the set position. In other words, when the same temperature raising step and heating step are performed with the orienting magnetic field application device 120B being in the set position, not only the thermal efficiency is poor, but also the orienting magnetic field application device 120B may not be able to generate a relatively strong magnetic field for magnetic field orientation due to the high temperature of the orienting magnetic field application device 120B, as described above in the section "Problem to be Solved by the Invention." On the other hand, according to the manufacturing method and the manufacturing apparatus 100B, the thermal efficiency is good, and the orienting magnetic field application device 120B can stably generate a relatively strong magnetic field for magnetic field orientation, as described above.

In the manufacturing method and the manufacturing apparatus 100B, the heating step (step S1504) is performed separately from the temperature raising step (step S1502) described above. However, instead of or in addition to this, the heating step (step S1504) may be implemented by the heating device 140B. In this case, the heating step (step S1504) and the temperature raising step (step S1502) may be performed by the heating device 140B after the placing step (step S1506) and before the setting step (step S1508B).

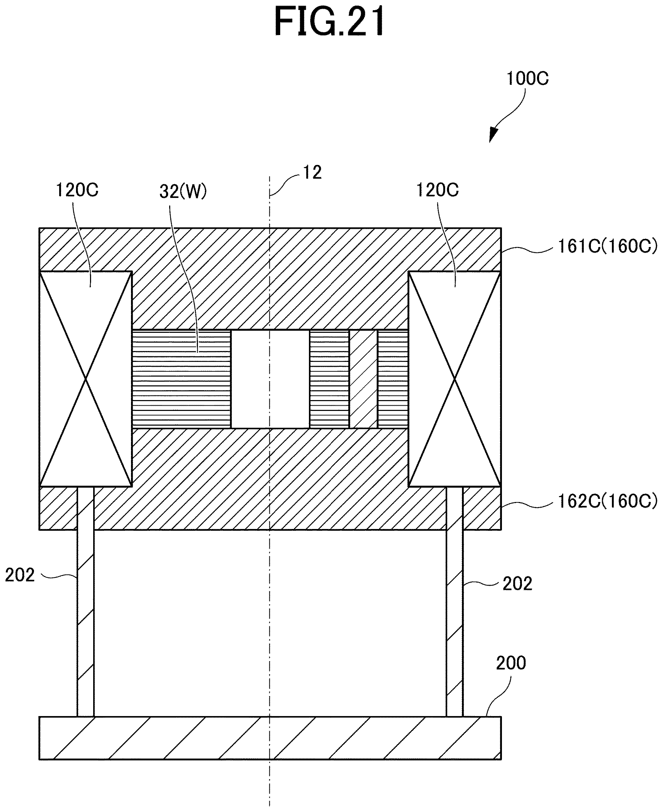

Next, a manufacturing method and manufacturing apparatus 100C according to still another embodiment (hereinafter also referred to as "third embodiment" for distinction) will be described with reference to FIG. 21 and the subsequent figures.

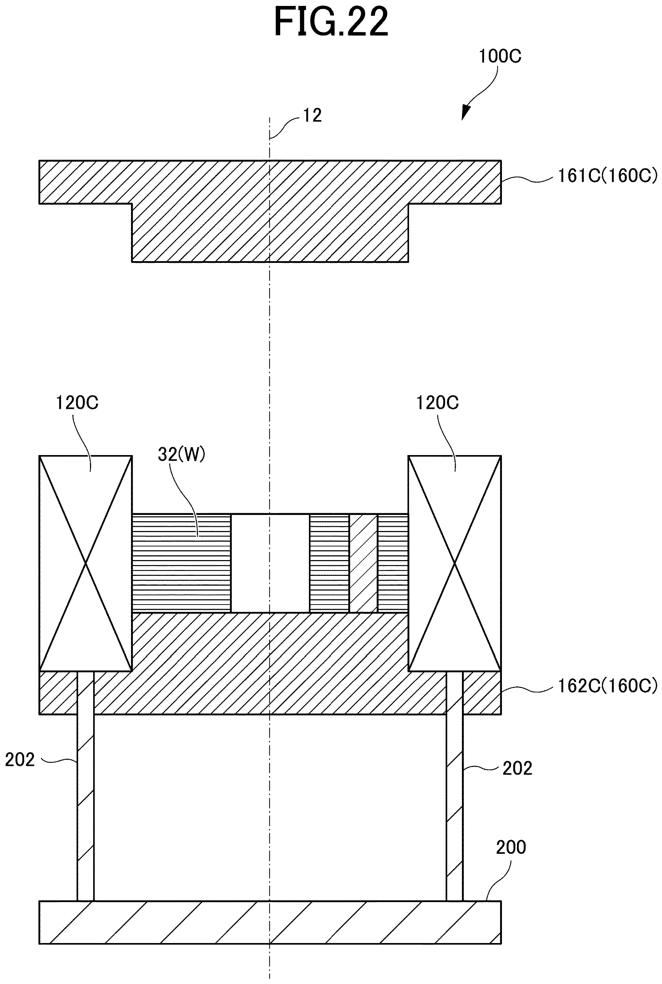

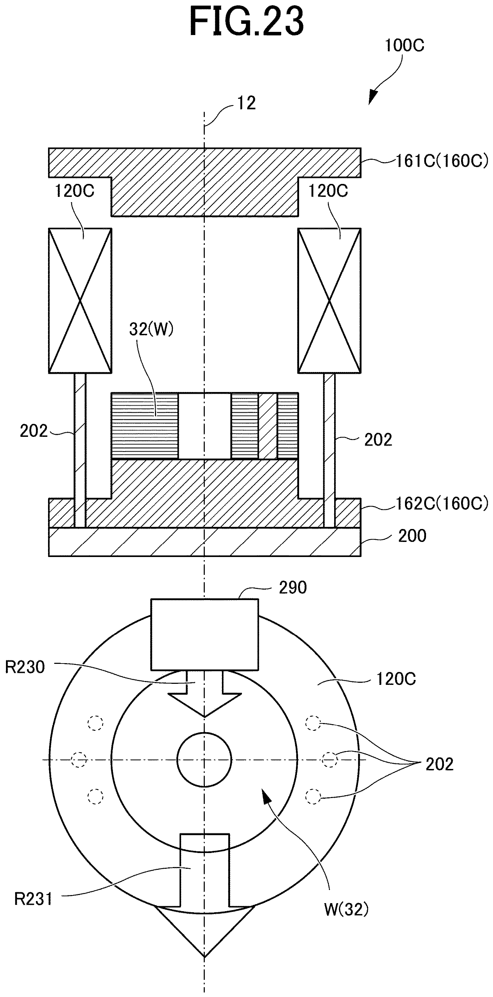

FIGS. 21 to 23 are illustrations of the manufacturing method and manufacturing apparatus 100C according to the third embodiment. FIG. 21 shows a state after injection molding, FIG. 22 shows a state in which a mold 160C is opened (i.e., a state in which an upper mold 161C and a lower mold 162C are separated), and FIG. 23 shows a state in which an orienting magnetic field application device 120C has been moved upward in the axial direction.

The manufacturing method and manufacturing apparatus 100C according to the third embodiment are mainly different from those of the second embodiment described above in that the orienting magnetic field application device 120C is movable in the axial direction. In this case, the orienting magnetic field application device 120C may be driven in the axial direction using the ejector pins 202 of the equipment 200. After the mold is opened (see FIG. 22), the orienting magnetic field application device 120C is moved to an axially upper position where it does not overlap the workpiece W as viewed in the radial direction. As shown in FIG. 23, the workpiece W can be moved (unloaded) in the radial direction (see arrow R231) for removal by being ejected in the radial direction by a robot 290 etc. (see arrow R230).

In the third embodiment, the state shown in FIG. 21 may be attained after the workpiece W is heated in the heating furnace 140 etc., as in the first embodiment described above. Alternatively, the workpiece W may be heated by a heating device (not shown) contained in the mold 160C with the orienting magnetic field application device 120C withdrawn upward (FIG. 23). In this case, the state shown in FIG. 21 may be attained by moving the orienting magnetic field application device 120C downward in the axial direction after the workpiece W is heated. In this case, moving the orienting magnetic field application device 120C from the non-set position to the set position immediately before the injection molding step (step S1510) can also minimize heat transfer from the rotor core 32 (workpiece W) to the orienting magnetic field application device 120C that may occur before the injection molding step is performed.

The third embodiment also has the same effects as those of the above embodiments.

The manufacturing method and manufacturing apparatus 100C according to the third embodiment use the mold 160C like the mold 160 described in the second embodiment. However, the manufacturing method and manufacturing apparatus 100C according to the third embodiment are also applicable when the mold jig 130 described in the first embodiment is used. That is, in the manufacturing apparatus 100A according to the modification, the orienting magnetic field application device 120Amay be replaced with the orienting magnetic field application device 120C according to the third embodiment.

Although the embodiments are described in detail above, the present disclosure is not limited to the specific embodiments, and various modifications and changes can be made within the scope of the claims. It is also possible to combine all or part of the constituent elements of the embodiments described above.

### Description of the Reference Numerals

1 ... motor (rotating electrical machine), 32 ... rotor core (rotor core for rotating electrical machine), 321, 322 ... magnet hole, 61, 62 ... bonded magnet, 100 ... manufacturing apparatus, 108 ... injection molding device, 120, 120A, 120B, 120C ... orienting magnetic field application device, 130 ... mold jig, 160, 160C ... mold, 140 ... heating furnace (heating device), 140B ... heating device, W ... workpiece

## Claims

1. A method for manufacturing a rotor for a rotating electrical machine, the method comprising:
a heating step of heating a workpiece having a magnetic hole in a non-set state in which an orienting magnetic field application device is located away from the workpiece, the workpiece being a workpiece of a rotor core for the rotating electrical machine;
a setting step of, after the heating step, attaining a set state in which the orienting magnetic field application device is located closer to the workpiece than in the non-set state; and
an injection molding step of, in the set state, filling the magnet hole in the workpiece with a material for a bonded magnet while applying an orienting magnetic field from the orienting magnetic field application device to the workpiece.

2. The method for manufacturing a rotor for a rotating electrical machine according to claim 1, wherein the heating step includes heating the workpiece thermally separated from the orienting magnetic field application device.

3. The method for manufacturing a rotor for a rotating electrical machine according to claim 1, wherein
the orienting magnetic field application device is movable between a set position corresponding to the set state and the non-set position offset radially outward or axially from the set position, the set position being a position in which the orienting magnetic field application device faces or contact the workpiece in a radial direction, and
the setting step includes moving the orienting magnetic field application device from the non-set position to the set position.

4. The method for manufacturing a rotor for a rotating electrical machine according to any one of claims 1 to 3, the method further comprising a temperature raising step of heating an injection molding mold, wherein the setting step is performed after the temperature raising step.

5. The method for manufacturing a rotor for a rotating electrical machine according to claim 1 or 2, the method further comprising a holding step of holding the workpiece by a mold jig, wherein
the heating step is performed after the holding step, and includes heating the workpiece held by the mold jig, together with the mold jig, and
the setting step is performed after the holding step, and includes positioning, with respect to the orienting magnetic field application device, the workpiece held by the mold jig.

6. An apparatus for manufacturing a rotor for a rotating electrical machine, the apparatus comprising:
a mold or a movable type mold jig in which a workpiece having a magnet hole is set, the workpiece being a workpiece of a rotor core for the rotating electrical machine;
a movable or fixed type orienting magnetic field application device;
an injection molding device that fills the magnet hole in the workpiece with a material for a bonded magnet; and
a heating device that heats the workpiece thermally separated from the orienting magnetic field application device.

7. The apparatus for manufacturing a rotor for a rotating electrical machine according to claim 6, wherein the orienting magnetic field application device is of a movable type and is movable with respect to the mold or the movable type mold jig in a radial or axial direction of the workpiece.

8. The apparatus for manufacturing a rotor for a rotating electrical machine according to claim 6, wherein
the orienting magnetic field application device is of a fixed type,
the mold jig is movable between a set position in which the mold jig holds the workpiece set in the mold jig and an orienting magnetic field from the orienting magnetic field application device is allowed to be applied to the workpiece and a non-set position in which the mold jig is located away from the orienting magnetic field application device, and
the heating device heats the mold jig holding the workpiece and being in the non-set position, together with the workpiece.
